# EUROPEAN PATENT APPLICATION

(11) **EP 4 851 777 A1**
(43) Date of publication of application: **09.12.2026**
(21) Application number: 25203332.9
(22) Date of filing: 19.09.2025
(51) Int. Cl.: G06F 7/498, G06F 16/22, G06F 7/544, G06F 16/901, G06F 17/10, G06F 17/17, G06N 3/063, G06F 7/483

(54) **TABLE LOOKUP PROCESSING SYSTEM AND METHOD, MEDIUM, DEVICE, AND CHIP**

(30) Priority: 05.06.2025 CN 202510749605
(71) Applicant: Beijing Horizon Information Technology Co., Ltd., Beijing 100094 (CN)
(72) Inventor: DING, Jinnan, Beijing, 100094 (CN)
(74) Representative: Dehns Germany Partnerschaft mbB

(57) **Abstract**

Embodiments of this disclosure disclose a table lookup processing system (20) and method, a medium, a device, and a chip. The system (20) includes: a memory (22); a processor (21), coupled to the memory; and a table lookup processing circuit (23) coupled to the memory and the processor. The table lookup processing circuit (23) is configured to: determine table lookup input data based on to-be-processed data from the processor (21) or to-be-processed data from the memory (22); determine a target input interval to which the table lookup input data belongs from at least one preset input interval; perform table lookup processing on the table lookup input data based on a target interval type corresponding to the target input interval, to obtain a table lookup result corresponding to the table lookup input data; determine a processing result corresponding to the to-be-processed data based on the table lookup result; and write the processing result into the memory (22).

## Description

### FIELD OF THE INVENTION

This disclosure relates to data processing technologies, and in particular, to a table lookup processing system and method, a medium, a device, and a chip.

### BACKGROUND OF THE INVENTION

In fields of intelligent driving, mobile terminals, and the like, fitting for operators (such as but not limited to complex functions) is generally implemented through a lookup table (LUT). If a quantity of entries in the lookup table is too small, low fitting accuracy may be easily resulted in. If the quantity of the entries is too large, too much storage space may be occupied.

### SUMMARY OF THE INVENTION

Embodiments of this disclosure provide a table lookup processing system and method, a medium, a device, and a chip, to effectively improve fitting accuracy of table lookup while occupying less storage space.

According to a first aspect of an embodiment of this disclosure, a table lookup processing system is provided, including:
a memory;
a processor, coupled to the memory; and
a table lookup processing circuit coupled to the memory and the processor, wherein the table lookup processing circuit is configured to:
determine table lookup input data based on to-be-processed data from the processor or to-be-processed data from the memory;
determine a target input interval to which the table lookup input data belongs from at least one preset input interval;
perform table lookup processing on the table lookup input data based on a target interval type corresponding to the target input interval, to obtain a table lookup result corresponding to the table lookup input data;
determine a processing result corresponding to the to-be-processed data based on the table lookup result; and
write the processing result into the memory.

According to a second aspect of an embodiment of this disclosure, a table lookup processing method is provided, including:
determining table lookup input data based on to-be-processed data;
determining a target input interval to which the table lookup input data belongs from at least one preset input interval;
performing table lookup processing on the table lookup input data based on a target interval type corresponding to the target input interval, to obtain a table lookup result corresponding to the table lookup input data; and
determining a processing result corresponding to the to-be-processed data based on the table lookup result.

According to a third aspect of an embodiment of this disclosure, a computer readable storage medium is provided. The storage medium stores a computer program, and the computer program is executed by a processor to implement the table lookup processing method according to any one of the foregoing embodiments of this disclosure.

According to a fourth aspect of an embodiment of this disclosure, an electronic device is provided. The electronic device includes: a processor; and a memory configured to store processor-executable instructions. The processor is configured to read the executable instructions from the memory, and execute the instructions to implement the table lookup processing method according to any one of the foregoing embodiments of this disclosure. Alternatively, the electronic device includes the table lookup processing system according to any one of the foregoing embodiments of this disclosure.

According to a fifth aspect of an embodiment of this disclosure, a computer program product is provided. When instructions in the computer program product are executed by a processor, the table lookup processing method according to any one of the foregoing embodiments of this disclosure is implemented.

According to a sixth aspect of an embodiment of this disclosure, a chip is provided, including the table lookup processing system according to any one of the foregoing embodiments of this disclosure.

According to the table lookup processing system and method, the medium, the device, and the chip that are provided in the foregoing embodiments of this disclosure, an input range of an operator is divided into at least one input interval (that is, preset input interval), and a corresponding lookup table is set for each preset input interval, so that different table lookup processing modes are adopted for different characteristics of the operator in different intervals. For example, for table lookup input data in a linear interval, a result corresponding to the table lookup input data may be obtained directly through a linear table lookup; and for table lookup input data in a non-linear interval, a table lookup interval may be further reduced through two-step table lookups. In this way, fitting accuracy of table lookup is effectively improved while less storage space is occupied, thereby effectively meeting different requirements of users for fitting accuracy and storage space according to the characteristics of the operator.

### BRIEF DESCRIPTION OF THE DRAWINGS

FIG. 1 is an exemplary application scenario of a table lookup processing system according to this disclosure;
FIG. 2 is a schematic diagram of a structure of a table lookup processing system according to an exemplary embodiment of this disclosure;
FIG. 3 is a schematic diagram of a structure of a table lookup processing system according to another exemplary embodiment of this disclosure;
FIG. 4 is a schematic diagram of a structure of a table lookup processing circuit according to an exemplary embodiment of this disclosure;
FIG. 5 is a schematic diagram of a linear table lookup interval subtype according to an exemplary embodiment of this disclosure;
FIG. 6 is a schematic diagram of an exponential table lookup interval subtype according to another exemplary embodiment of this disclosure;
FIG. 7 is a schematic flowchart of a table lookup processing method according to an exemplary embodiment of this disclosure;
FIG. 8 is a schematic flowchart of a table lookup processing method according to another exemplary embodiment of this disclosure;
FIG. 9 is a schematic flowchart of a table lookup processing method according to still another exemplary embodiment of this disclosure;
FIG. 10 is a schematic flowchart of a table lookup processing method according to yet another exemplary embodiment of this disclosure;
FIG. 11 is a schematic flowchart of a table lookup processing method according to still yet another exemplary embodiment of this disclosure;
FIG. 12 is a schematic flowchart of a table lookup processing method according to a further exemplary embodiment of this disclosure; and
FIG. 13 is a diagram of a structure of an electronic device according to an embodiment of this disclosure.

### DETAILED DESCRIPTION OF THE EMBODIMENTS

To explain this disclosure, exemplary embodiments of this disclosure are described below in detail with reference to accompanying drawings. Obviously, the embodiments described are merely some, rather than all of embodiments of this disclosure. It should be understood that this disclosure is not limited to the exemplary embodiments.

It should be noted that unless otherwise specified, the scope of this disclosure is not limited by relative arrangement, numeric expressions, and numerical values of components and steps described in these embodiments.

### Overview of this disclosure

In a process of implementing this disclosure, the inventor finds that in an integrated circuit such as a system on chip (SoC for short) or a neural network accelerator, operations of a complex function (or operator) are usually fitted by using a lookup table (LUT for short), so as to obtain an operation result of data to be operated through the operator. Output data (that is, entries) corresponding to a plurality pieces of discrete preset input data are typically preset for the operator in the lookup table. When it is needed to perform operations corresponding to the operator on the data to be operated, the data to be operated is used as table lookup input data. In this case, based on a magnitude relationship between the table lookup input data and the preset input data, output data corresponding to the table lookup input data is obtained through the lookup table and linear interpolation. If a quantity of the entries in the lookup table is too small, low fitting accuracy may be easily resulted in. For example, for a nonlinear operator, output data corresponding to input data between two pieces of preset input data with adjacent sizes is obtained by performing linear interpolation on output data corresponding to the two pieces of adjacent preset input data. If the quantity of the entries is too small, there is a large interval between the two pieces of adjacent preset input data, and fitting accuracy of fitting a nonlinear operation through linear interpolation is low. If the quantity of the entries is too large, for example, the interval between two pieces of adjacent preset input data is very small, although high fitting accuracy of table lookup can be achieved, too much storage space may be occupied, bringing excessive storage pressure to the integrated circuit.

### Exemplary overview

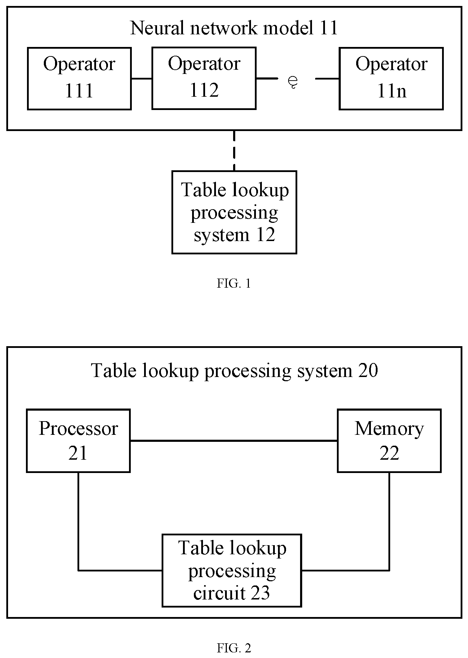

FIG. 1 is an exemplary application scenario of a table lookup processing system according to this disclosure. As shown in FIG. 1, in an integrated circuit such as a system on chip (SoC for short) or a neural network accelerator, it is usually needed to support operations of a plurality types of neural network models. As shown in FIG. 1, the plurality types of neural network models, for example but not limited to, include a neural network model 11, which includes a plurality of operators, such as an operator 111, an operator 112, ..., and an operator 11n, where n is a positive integer. For a complex one among these operators, a table lookup processing system 12 in embodiments of this disclosure may be used to simulate operations of this operator to obtain an operation result. Specifically, the table lookup processing system 12 may include a memory, a processor, and a table lookup processing circuit. The table lookup processing circuit is configured to: determine table lookup input data based on to-be-processed data from the processor or to-be-processed data from the memory; further determine a target input interval to which the table lookup input data belongs from at least one preset input interval; perform table lookup processing on the table lookup input data based on a target interval type corresponding to the target input interval, to obtain a table lookup result corresponding to the table lookup input data; and then determine a processing result corresponding to the to-be-processed data based on the table lookup result; and write the processing result into the memory, so as to simulate the operations of the operator through table lookup processing. According to the embodiments of this disclosure, an input range of the operator is divided into at least one input interval (that is, preset input interval), and a table lookup processing mode corresponding to the preset input interval may be adopted for characteristics of the operator in the preset input interval. For example, for table lookup input data in a linear interval, a result corresponding to the table lookup input data may be obtained directly through a linear table lookup; and for table lookup input data in a non-linear interval, a table lookup interval may be further reduced through two-step table lookups. In this way, fitting accuracy of table lookup is effectively improved while less storage space is occupied, thereby effectively meeting different requirements of users for fitting accuracy and storage space according to the characteristics of the operator.

### Exemplary system

FIG. 2 is a schematic diagram of a structure of a table lookup processing system according to an exemplary embodiment of this disclosure. The table lookup processing system provided in this embodiment may be applied to an electronic device, a system on chip (SoC for short), or a neural network processor. The electronic device includes, for example but is not limited to, a server, an in-vehicle computing platform (or referred to as a vehicle-mounted terminal), a mobile phone, and a tablet. The system on chip includes, for example but is not limited to, an intelligent driving SoC, an intelligent cockpit SoC, and a SoC installed in the mobile phone. As shown in FIG. 2, a table lookup processing system 20 in this embodiment of this disclosure may include a processor 21, a memory 22, and a table lookup processing circuit 23.

The processor 21 is coupled to the memory 22. The table lookup processing circuit 23 is coupled to the memory 22 and the processor 21, respectively.

The table lookup processing circuit 23 is configured to: determine table lookup input data based on to-be-processed data from the processor 21 or to-be-processed data from the memory 22; determine a target input interval to which the table lookup input data belongs from at least one preset input interval; perform table lookup processing on the table lookup input data based on a target interval type corresponding to the target input interval, to obtain a table lookup result corresponding to the table lookup input data; determine a processing result corresponding to the to-be-processed data based on the table lookup result; and write the processing result into the memory 22.

The memory 22 may be configured to store the to-be-processed data and/or to store executable instructions of the processor 21. The processor 21 may be referred to as a first processor. The memory 22 may be referred to as a first memory. The table lookup processing circuit 23 is a hardware logic circuit that can complete table lookup processing functions related to this embodiment of this disclosure.

In some optional embodiments, during a process of running a computer program that includes a specified type of operator, the processor 21 may call, when relevant computational tasks need to be executed through the operator, the table lookup processing circuit 23 to accelerate an operation speed of the operator to quickly obtain a processing result corresponding to the operator. The processor 21 may obtain to-be-processed data corresponding to the operator based on processing logic of the computer program. The specified type of operator includes, for example but is not limited to, an operator such as finding a reciprocal or a square root. Optionally, the processor 21 may store the to-be-processed data into the memory 22, or transmit the to-be-processed data to the table lookup processing circuit 23. The table lookup processing circuit 23 is electrically connected to the processor 21 and the memory 22, and can obtain the to-be-processed data from the processor 21 or the memory 22. The table lookup processing circuit 23 determines the table lookup input data based on the to-be-processed data. The table lookup input data is input data on which table lookup processing is to be performed. The preset input interval is an input interval obtained by dividing an input data range of the operator into a plurality of intervals in advance. For example, the input data range of the operator is divided into K (K is a positive integer) input intervals, and the K input intervals are used as preset input intervals.

In some optional embodiments, the K preset input intervals may be either uniformly divided input intervals or non-uniformly divided input intervals. The uniformly divided input intervals indicate that the K preset input intervals have a same interval size. In other words, a difference between an upper bound (that is, a maximum value) and a lower bound (that is, a minimum value) of each preset input interval is same.

In some optional embodiments, the preset input interval may be set according to characteristics of the operator and requirements for precision of an operation result. For example, an input data range in which actual output data of the operator fluctuates greatly with input data may be divided into preset input intervals by using a smaller interval. An input data range in which the actual output data of the operator fluctuates less with the input data may be divided into preset input intervals by using a larger interval, so as to ensure that table lookup accuracy within each preset input interval meets the requirements for accuracy.

In some optional embodiments, the target input interval to which the table lookup input data belongs refers to a preset input interval, among the preset input intervals, in which the input data range includes the table lookup input data. Interval types include a linear interval, a linear table lookup interval, and an exponential table lookup interval. Different interval types correspond to different table lookup processing modes. The target interval type corresponding to the target input interval is one of the interval types. Table lookup processing corresponding to the target interval type may be performed on the table lookup input data based on the target interval type, to obtain the table lookup result; and then, the processing result corresponding to the to-be-processed data may be determined based on the table lookup result. The table lookup processing circuit 23 may write the processing result into the memory 22, and the processor 21 may obtain the processing result from the memory 22, so as to perform other tasks subsequent to the operator. For example, when the processor 21 is running a computer program corresponding to the neural network model, each operator in the neural network model may be used as a task, and some operators may obtain processing results corresponding to the operators by calling the table lookup processing circuit 23. The processor 21 may execute other computational tasks subsequent to the operators based on the processing results.

In some optional embodiments, the table lookup processing circuit 23 may be implemented based on one or more of a comparator, a register, a selector, an AND logic unit, an OR logic unit, a non-logic unit, an adder, a multiplier, a controller, and other logic devices. For example, the register may cache the table lookup input data; the comparator is configured to compare the table lookup input data with the upper bound and the lower bound of the preset input interval to determine the target input interval to which the table lookup input data belongs; the selector is configured to select the target interval type corresponding to the target input interval; and the controller is configured to perform table lookup processing on the table lookup input data based on the target interval type to obtain the table lookup result, and determine the processing result corresponding to the to-be-processed data based on the table lookup result. This is merely an exemplary implementation of the table lookup processing circuit 23, and practical applications are not limited to this exemplary implementation.

According to the table lookup processing system provided in the embodiments of this disclosure, an input range (that is, the input data range) of the operator is divided into at least one input interval, that is, is divided into at least one preset input interval, and a corresponding lookup table is set for a preset input interval, so that different table lookup processing modes are adopted for different characteristics of the operator in different intervals. The different characteristics may include linearity and nonlinearity. For example, for table lookup input data in the linear interval, a result corresponding to the table lookup input data may be obtained directly through a linear table lookup; and for table lookup input data in a non-linear interval, a result corresponding to the table lookup input data may be obtained through two-step table lookups. According to this mode, the table lookup interval may be further reduced. Thus, fitting accuracy of table lookup is effectively improved while less storage space is occupied, thereby effectively meeting different requirements of users for fitting accuracy and storage space according to the characteristics of the operator.

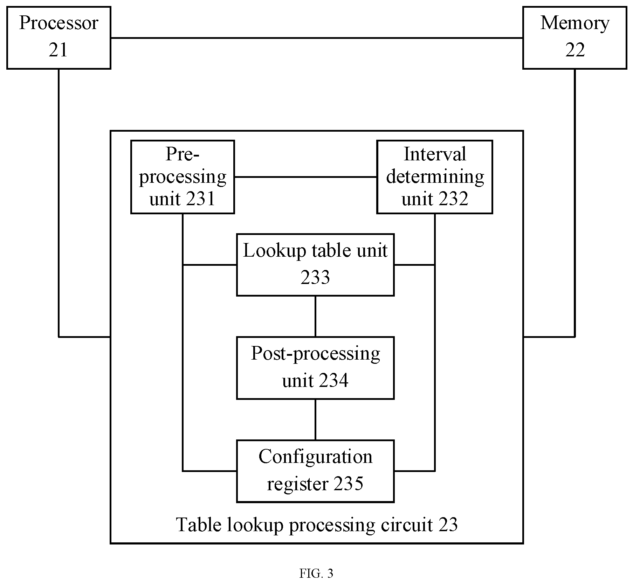

FIG. 3 is a schematic diagram of a structure of a table lookup processing system according to another exemplary embodiment of this disclosure.

In some optional embodiments, on the basis of the embodiment shown in FIG. 2, as shown in FIG. 3, the table lookup processing circuit 23 may include a pre-processing unit 231, an interval determining unit 232, a lookup table unit 233, and a post-processing unit 234.

The pre-processing unit 231 is configured to perform pre-processing on the to-be-processed data to obtain the table lookup input data.

The interval determining unit 232 is configured to determine the target input interval to which the table lookup input data belongs.

The lookup table unit 233 is configured to perform table lookup processing on the table lookup input data based on the target interval type corresponding to the target input interval, to obtain the table lookup result corresponding to the table lookup input data.

The post-processing unit 234 is configured to perform post-processing on the table lookup result to obtain the processing result corresponding to the to-be-processed data.

A pre-processing mode corresponding to the pre-processing unit 231 refers to a processing mode for converting the to-be-processed data into input data of a data type suitable for table lookup. For example, pre-processing may include performing symbol processing on the table lookup input data based on symmetry of the operator, and processing the table lookup input data based on the data type of the table lookup input data. For example, if the data type of the table lookup input data is floating-point data, the pre-processing may include performing exponent pre-processing on the table lookup input data. For a symmetrical operator, a preset input interval may be set for only a part of the input data range based on the symmetry. Further, taking an operator y=f(x) as an example, if f(x) is symmetric about a y-axis, a preset input interval may be set only for a part where x is greater than or equal to 0, or only for a part where x is less than or equal to 0. A table lookup result corresponding to input data within another part of the input data range may be obtained through a table lookup result of input data symmetric to that input data. For example, for a case where x is less than 0, (arithmetic-)symbol processing may be performed on x to obtain -x, which becomes table lookup input data greater than 0. A table lookup result of -x may be obtained through table lookup processing. Further, a table lookup result corresponding to x may be obtained based on the symmetry of the operator.

In some optional embodiments, the pre-processing unit 231 may be a hardware logic unit.

In some optional embodiments, the interval determining unit 232 may determine, from the preset input intervals, the target input interval to which the table lookup input data belongs by comparing the table lookup input data with boundary values of the preset input intervals. For example, if the table lookup input data is greater than or equal to a lower bound of a preset input interval A and is less than an upper bound of the preset input interval A, the target input interval to which the table lookup input data belongs is determined as the preset input interval A.

In some optional embodiments, the interval determining unit 232 may be a hardware logic unit.

In some optional embodiments, the lookup table unit 233 may determine the target interval type corresponding to the target input interval based on interval types corresponding to the pre-configured preset input intervals. Further, a corresponding lookup processing flow is triggered based on the target interval type to perform table lookup processing on the table lookup input data, so as to obtain the table lookup result corresponding to the table lookup input data. Different interval types correspond to different table lookup processing flows. The interval type is used to distinguish between types of the table lookup processing flows required by the preset input intervals.

In some optional embodiments, the lookup table unit 233 may be a hardware logic unit.

In some optional embodiments, a post-processing mode corresponding to the post-processing unit 234 is a process of converting the table lookup result into the processing result corresponding to the to-be-processed data. Corresponding to the pre-processing, the post-processing may include symbol processing, exponent post-processing, and the like for the table lookup result. For example, for an operator y=f(x) that is symmetric about an origin, a preset input interval is set only for a part where x is greater than or equal to 0 For a part where x is less than 0, symbol processing is performed on x in the pre-processing process to obtain -x that is greater than 0. -x is used as the table lookup input data, and a table lookup result y1=f(-x) is obtained through table lookup processing. Further, symbol processing is performed on y1 based on the symmetry of the operator to obtain -y1, which is a processing result corresponding to x.

In some optional embodiments, the interval determining unit 232 is electrically connected to the pre-processing unit 231, the lookup table unit 233 is electrically connected to the pre-processing unit 231 and the interval determining unit 232, and the post-processing unit is electrically connected to the lookup table unit 233.

In the embodiments of this disclosure, the table lookup input data suitable for table lookup processing is obtained by performing pre-processing on the to-be-processed data, and the table lookup result is obtained by performing table lookup processing on the table lookup input data. After the table lookup result is obtained, post-processing is performed on the table lookup result to obtain the processing result corresponding to the to-be-processed data. Thus, based on the characteristics of the operator, the to-be-processed data that is not suitable for the table lookup processing may be converted into the table lookup input data that is suitable for the table lookup processing, which helps to accelerate a computation process of the operator through the table lookup processing.

In some optional embodiments, as shown in FIG. 3, the table lookup processing circuit 23 may further include:
a configuration register 235, configured to store configuration information from the processor 21, where the configuration information includes configuration information required by at least one unit of the pre-processing unit 231, the interval determining unit 232, the lookup table unit 233, and the post-processing unit 234 in the table lookup processing circuit 23.

The configuration register 235 may be any type of register, such as a general-purpose register or another type of register. The configuration information required by the units in the table lookup processing circuit 23 is configuration information required by the units to complete normal work during a table lookup processing process. The configuration information may include, for example, preset parameters, a status of a clock signal, and working statuses of the units in the table lookup processing circuit 23. This is not specifically limited. The preset parameters may include, for example, the symmetry of the operator, an exponent pre-processing mode, a quantity of the preset input intervals, upper and lower bounds of the preset input intervals, the interval types corresponding to the preset input intervals, and an exponent post-processing mode. The status of the clock signal and the working statuses of the units are used to ensure the normal work of the units in the table lookup processing circuit 23. The units in the table lookup processing circuit 23 may work together based on respective preset parameters to implement a table lookup function in the embodiments of this disclosure.

In some optional embodiments, when needing to call the table lookup processing circuit 23, the processor 21 may write the configuration information into the configuration register 235, so as to provide the required configuration information for the units in the table lookup processing circuit 23.

In some optional embodiments, the configuration register 235 is electrically connected to the pre-processing unit 231, the interval determining unit 232, the lookup table unit 233, and the post-processing unit 234.

In the embodiments of this disclosure, the configuration information is stored by using the configuration register, so as to provide the required configuration information for the units in the table lookup processing circuit 23, thereby providing effective information support for the normal work of the units in the table lookup processing circuit 23.

In some optional embodiments, the pre-processing unit 231 is configured to perform pre-processing on the to-be-processed data based on symmetry of a pre-configured operator, to obtain the table lookup input data, wherein the operator is an operator simulated through a table lookup processing function of the table lookup processing circuit 23.

The post-processing unit is configured to perform post-processing on the table lookup result based on the symmetry of the operator, to obtain the processing result.

The symmetry refers to a property for which the operator remains invariant in a certain geometric transformation; and may include that the operator is symmetric about an origin or an axis, or is periodically symmetric. Taking the operator y=f(x) as an example, that the operator is symmetric about the origin may be expressed as f(-x)=-f(x). A symmetry axis for which the operator is symmetric about an axis may be a y-axis (that is, x=0) or other straight lines x=a (where a is not equal to 0). That the operator is symmetric about the y-axis may be expressed as f(-x)=f(x). That the operator is symmetric about x=a may be expressed as f(a+x)=f(a-x). Periodic symmetry may be expressed as f(x+T)=f(x), where T represents a cycle. The pre-processing modes corresponding to different symmetries may be same or different. For example, pre-processing modes for operators symmetric about the axis and symmetric about the y-axis are to perform symbol processing on the to-be-processed data if the to-be-processed data does not belong to a table lookup input range. In other words, if the table lookup input range indicates that x is greater than or equal to 0, when the to-be-processed data is less than 0, the to-be-processed data is transformed into table lookup input data greater than 0 by changing a sign of the to-be-processed data. A pre-processing mode for the periodically symmetric operator is to increase or decrease a certain quantity of cycles T for the to-be-processed data, and transform the to-be-processed data into a cycle corresponding to the table lookup input range. For example, the preset input intervals are input intervals within a range of 0-T. If the to-be-processed data is greater than T, by reducing the to-be-processed data by n (n is a positive integer) times of T, the to-be-processed data is converted to the range of 0-T to conform to the table lookup input range. In other words, f(x+nT)=f(x) may be obtained according to f(x+T)=f(x). If the to-be-processed data is x+nT, the to-be-processed data is reduced by nT to obtain x, which is data within the range of 0-T and is used as the table lookup input data. A table lookup result corresponding to f(x), that is, a table lookup result of f(x+nT), is obtained through the table lookup processing.

In some optional embodiments, the table lookup processing system 20 may include one or more table lookup processing circuits 23, each of which may support a table lookup processing function of simulating operations of one or more operators. For example, the table lookup processing circuit 23 may simulate operations of an operator for finding a reciprocal and an operator for finding a square root.

In some optional embodiments, the post-processing performed based on the symmetry of the operator is a process of converting the table lookup result into the processing result corresponding to the to-be-processed data based on the symmetry. For example, for the operator that is symmetric about the y -axis, since f(-x)=f(x), if the to-be-processed data x is greater than 0, the to-be-processed data x is directly determined as the table lookup input data, and a table lookup result corresponding to x is obtained through table lookup. In this case, the post-processing is to determine the table lookup result as the processing result corresponding to the to-be-processed data x. If the to-be-processed data x is less than 0, -x is determined as the table lookup input data through pre-processing, and a table lookup result corresponding to -x is obtained through table lookup. In this case, the post-processing is to determine the table lookup result corresponding to -x as the processing result corresponding to the to-be-processed data x. For the operator that is symmetric about the origin, if the to-be-processed data x is less than 0, -x is determined as the table lookup input data through pre-processing, and a table lookup result corresponding to -x is obtained through table lookup. In this case, the post-processing is to perform symbol processing on a table lookup result y1 to obtain -y1, which is determined as the processing result corresponding to the to-be-processed data x.

In the embodiments of this disclosure, for the symmetrical operator, table lookup input data that conforms to the table lookup input range is obtained by performing pre-processing on the to-be-processed data; and after the table lookup result is obtained through table lookup, post-processing is performed to obtain the processing result corresponding to the to-be-processed data. In this way, operation results of the entire input data range can be obtained based on a table lookup processing function for only a part of the input data range of the operator, thereby effectively reducing occupation of the storage space.

In some optional embodiments, the to-be-processed data is floating-point data.

The pre-processing unit is configured to perform exponent pre-processing on the to-be-processed data according to a pre-configured exponent pre-processing mode, to obtain the table lookup input data, wherein the exponent pre-processing mode is determined based on an operation type of the floating-point data.

The post-processing unit is configured to perform exponent post-processing on the table lookup result according to a pre-configured exponent post-processing mode, to obtain the processing result, wherein the exponent post-processing mode corresponds to the exponent pre-processing mode, and the exponent is an exponent corresponding to the floating-point data.

The floating-point data is a type of data used to represent real numbers. According to an idea of scientific notation, a numerical value is decomposed into a sign bit, a mantissa, and an exponent. The mantissa represents a significant figure, the exponent determines a scaling ratio of the numerical value, and the sign bit represents a positive or negative sign of the value. For example, 0 is positive and 1 is negative. For example, the floating-point data may be represented as x = (-1)^{S} _{*} m _{*} b^{E}, wherein S represents a sign bit, m represents a mantissa, E represents an exponent, and b represents a preset value. For example, b is 2. The exponent pre-processing mode and the exponent post-processing mode are set according to an operation type of the operator. For example, for the operator for finding a reciprocal, since a sign bit remains unchanged, the sign bit may temporarily not be considered during a computation process. If it is satisfied that x=m _{*} b^{E} and f(x)=1/x=1/(m _{*} b^{E})=1/m*b^{-E}, the exponent pre-processing mode is to determine a mantissa m within a preset range, wherein m is used as the table lookup input data. A table lookup result (that is, the floating-point data) of 1/m is obtained though table lookup. The exponent post-processing mode is to merge exponents, that is, to subtract E from the exponent of the floating-point data in table lookup result 1/m, which is equivalent to 1/m*b^{-E}. The preset range is, for example, a range of [1, 2). For another example, for the operator for finding a square root, if it is satisfied that $f \left(x\right) = \sqrt{x} = \sqrt{m ∗ {b}^{E}}$, the exponent pre-processing mode is: if the exponent E is an even exponent, it is satisfied that $f \left(x\right) = \sqrt{x} = \sqrt{m ∗ {b}^{E}} = \sqrt{m} ∗ {b}^{\frac{E}{2}}$, and the exponent E is divided by 2 to obtain E/2, where m is used as the table lookup input data. A table lookup result of floating-point data of $\sqrt{m}$ is obtained through table lookup. The exponent post-processing mode is to merge exponents, that is, to add E/2 to an exponent of the floating-point data of $\sqrt{m}$, which is equivalent to $\sqrt{m} ∗ {b}^{\frac{E}{2}}$. If the exponent E is an odd number, if it is satisfied that $f \left(x\right) = \sqrt{x} = \sqrt{m ∗ {b}^{E}} = \sqrt{2 m} ∗ {b}^{\frac{E - 1}{2}}$ , the exponent E is subtracted by 1 and the mantissa m is multiplied by 2. To be specific, 2m is used as query input data. The table lookup result of the floating-point data of $\sqrt{2 m}$ is obtained through table lookup. The exponent post-processing mode is to merge instructions, that is, to add $\frac{E - 1}{2}$ to an exponent of the floating-point data of $\sqrt{2 m}$ that is obtained through table lookup, which is equivalent to $\sqrt{2 m} ∗ {b}^{\frac{E - 1}{2}}$. For any other operator that can be converted into an operator with separated mantissa and exponent, such as finding a reciprocal for a square root of x, operations of the operator may be converted into table lookup processing according to an exponent pre-processing mode and an exponent post-processing mode similar to the foregoing principles. Details are not described herein.

In the embodiments of this disclosure, for operations of the floating-point data, some operations of the floating-point data may be converted into table lookup operations through exponent pre-processing and exponent post-processing, thereby effectively improving computational efficiency. Moreover, because exponent pre-processing is performed on the to-be-processed data, the table lookup input data is transformed from the floating-point data to data related to the mantissa of the floating-point data, such as the operator for finding a reciprocal. The mantissa m is determined within the preset range according to the exponent pre-processing mode, so that a data range (that is, from negative infinity to positive infinity) of the floating-point data is transformed to a data range of the mantissa m, such as [1, 2], thereby effectively reducing a fitting range of table lookup and improving fitting accuracy.

In some optional embodiments, the pre-processing unit is configured to process the to-be-processed data based on symmetry of a pre-configured operator, to obtain first input data; and perform exponent pre-processing on the first input data according to a pre-configured exponent pre-processing mode, to obtain the table lookup input data.

The post-processing unit is configured to process the table lookup result based on the symmetry of the operator, to obtain a first processing result; and perform exponent post-processing on the first processing result according to a pre-configured exponent post-processing mode, to obtain the processing result.

When the to-be-processed data is floating-point data and the operator is symmetry, the pre-processing includes pre-processing about the symmetry and exponent pre-processing, and the corresponding post-processing includes post-processing about the symmetry and exponent post-processing. The specific operation of processing the to-be-processed data to obtain the first input data based on the symmetry is similar to that of performing pre-processing based on the symmetry in the foregoing embodiments. The specific operation of performing exponent pre-processing on the first input data according to the pre-configured exponent pre-processing mode is similar to that of performing exponent pre-processing on the to-be-processed data according to the exponent pre-processing mode in the foregoing embodiments. For the specific operations of processing the table lookup result based on the symmetry and performing exponent post-processing on the first processing result according to the exponent post-processing mode, reference may be made to the foregoing embodiments, and details are not described herein.

In the embodiments of this disclosure, for operations for the floating-point data of the operator satisfying symmetry, the to-be-processed data is converted into data that conforms to a table lookup input range for table lookup of the floating-point data in combination with symmetric pre-processing and exponent pre-processing. After the table lookup result is obtained through table lookup processing, the table lookup result is converted into the processing result corresponding to the to-be-processed data further in combination with symmetric post-processing and exponent post-processing, thereby improving computational efficiency of performing operations on the floating-point data.

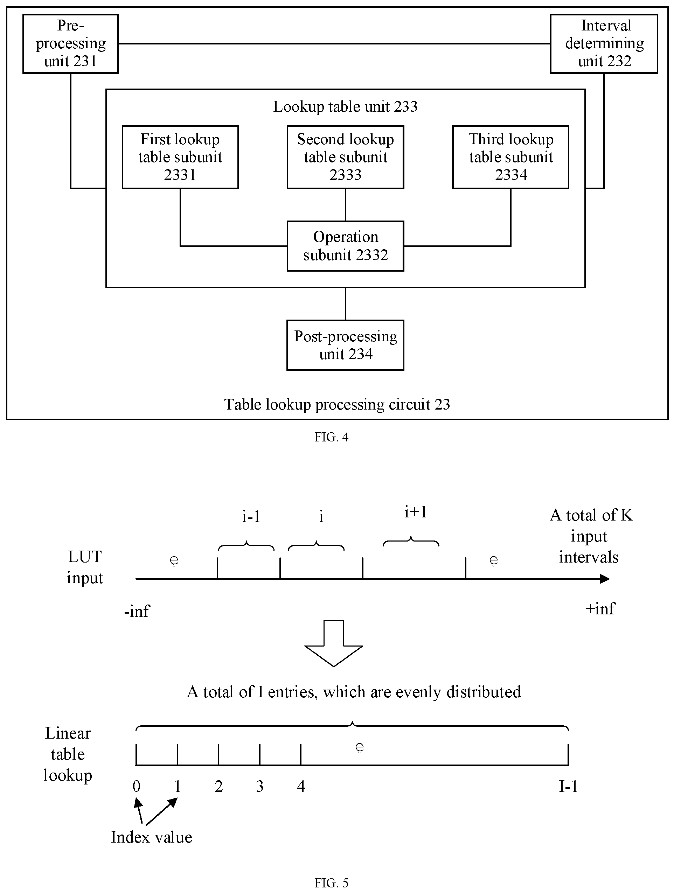

FIG. 4 is a schematic diagram of a structure of a table lookup processing circuit according to an exemplary embodiment of this disclosure.

In some optional embodiments, on the basis of any one of the foregoing embodiments, the lookup table unit 233 may include a first lookup table subunit 2331 and an operation subunit 2332.

The first lookup table subunit 2331 is configured to perform first table lookup processing based on the target input interval, to obtain a first table lookup output value.

The operation subunit 2332 is configured to determine a first table lookup result based on the table lookup input data and the first table lookup output value, and determine the table lookup result corresponding to the table lookup input data based on the first table lookup result and the target interval type.

Each input interval has a corresponding LUT entry. The LUT entry corresponding to the target input interval may be determined based on the target input interval, and the first table lookup result may be determined based on the LUT entry. The LUT entry may include fitting parameters corresponding to the target input interval, and the fitting parameters may include a fitting slope and a fitting offset. The first table lookup output value is a fitting parameter corresponding to the target input interval. For example, the first table lookup output value includes a fitting slope transK and a fitting offset transB. The operation subunit 2332 obtains the first table lookup result through a fitting operation based on the table lookup input data and the first table lookup output value, which may be expressed as L1=(x+transB)*transK. Further, the table lookup result corresponding to the table lookup input data is determined based on the first table lookup result and the target interval type. If the target interval type is a linear interval, the first table lookup result is a table lookup result corresponding to the table lookup input data. If the target interval type is a table lookup interval, a secondary table lookup further needs to be performed based on the first table lookup result, to obtain the table lookup result corresponding to the table lookup input data.

In some optional embodiments, the operation subunit 2332 may include devices such as a multiplier and an adder, and the first table lookup result may be obtained through an addition operation and a multiplication operation.

In the embodiments of this disclosure, the first table lookup processing is first performed based on the target input interval to obtain the first table lookup output value, which represents the fitting parameter corresponding to the target input interval; and then, the first table lookup result is determined based on the table lookup input data and the first table lookup output value, and the table lookup result corresponding to the table lookup input data is further determined in combination with the target interval type corresponding to the target input interval. Thus, table lookup processing for different interval types is effectively implemented.

In some optional embodiments, the operation subunit 2332 is configured to:

in response to that the target interval type corresponding to the target input interval is a first type, determine the first table lookup result as the table lookup result corresponding to the table lookup input data.

The first type is a linear interval, that is, the operator is linear within the target input interval, or output data of the operator is in a linear relationship to input data within the target input interval. In this case, the first table lookup output value corresponding to the target input interval is a fitting parameter corresponding to the linear relationship, and the first table lookup result obtained based on this fitting parameter is the table lookup result corresponding to the table lookup input data.

In the embodiments of this disclosure, for the linear interval, the table lookup result corresponding to the table lookup input data may be obtained through a single table lookup, which effectively reduces occupation of a lookup table for the storage space while ensuring table lookup accuracy.

In some optional embodiments, the lookup table unit 233 further includes a second lookup table subunit 2333.

The operation subunit 2332 is further configured to determine, in response to that the target interval type is a second type, a target index value for a secondary table lookup based on the first table lookup result, and transmit the target index value to the second lookup table subunit 2333.

The second lookup table subunit 2333 is configured to perform table lookup processing based on the target index value, to obtain a second table lookup output value.

The operation subunit 2332 is further configured to determine the table lookup result based on the first table lookup result and the second table lookup output value.

The second type is a non-linear interval. For the non-linear interval (which may also be referred to as a table lookup intervals), to improve accuracy of table lookup, two layers of table lookup processing may be set. First, the first table lookup result is obtained through the first table lookup processing described above, wherein the first table lookup result is used to determine an index value for the secondary table lookup.

In some optional embodiments, the operation subunit 2332 may convert the first table lookup result into the target index value for the secondary table lookup according to a pre-configured index value determining rule. The index value determining rule may be set based on a mapping relationship between a range of the first table lookup result and a range of the index value for the second table lookup, so as to convert the first table lookup result into a target index value that conforms to an index value range of the secondary table lookup.

In some optional embodiments, the second lookup table subunit 2333 performs secondary table lookup processing based on the target index value, to obtain the second table lookup output value. The second table lookup output value may include fitting parameters corresponding to an index value interval to which the target index value belongs, and the fitting parameters may include linear fitting parameters or a polynomial fitting parameters. The linear fitting parameters may include a fitting slope and a fitting offset, while the polynomial fitting parameters may include a polynomial coefficient. For example, the second table lookup output value may include linear fitting parameters interK and interB, or may include polynomial fitting parameters C0, C1, C2, ..., and Cm, where m represents a quantity of polynomials. When m is greater than 1, taking a quadratic polynomial as an example, it is satisfied that y=C0+C1x+C2x².

In some optional embodiments, the operation subunit 2332 may fit to obtain the table lookup result corresponding to the table lookup input data based on the first table lookup result and the second table lookup output value. Taking linear fitting as an example, it may be expressed that L2=(L 1+interB)*interK.

In the embodiments of this disclosure, for the non-linear interval, the table lookup result of the first table lookup is mapped to the index value range of the secondary table lookup. Because the index value range is further divided into a plurality of intervals through the index value for the secondary table lookup, each interval corresponds to a set of fitting parameters, for determining a final table lookup result corresponding to the table lookup input data. This is equivalent to performing secondary division on a non-linear input interval. Thus, the fitting accuracy of table lookup can be effectively improved while less storage space is occupied, helping to balance performance of the table lookup processing and the fitting accuracy of table lookup.

In some optional embodiments, the second type includes a linear table lookup interval subtype and an exponential table lookup interval subtype.

The operation subunit 2332 is specifically configured to: in response to that the target interval type is the linear table lookup interval subtype, determine the target index value based on the first table lookup result and a mapping relationship corresponding to the linear table lookup interval subtype; or in response to that the target interval type is the exponential table lookup interval subtype, determine the target index value based on the first table lookup result and a mapping relationship corresponding to the exponential table lookup interval subtype.

The linear table lookup interval subtype indicates that the index value for the secondary table lookup is in a linear relationship to the first table lookup result. The exponential table lookup interval subtype indicates that the index value for the secondary table lookup is in a linear relationship to an exponent of floating-point data corresponding to the first table lookup result.

In some optional embodiments, if the target interval type is the linear table lookup interval subtype, the first table lookup result is mapped to the target index value based on the mapping relationship (which may be referred to as a first mapping relationship) corresponding to the linear table lookup interval subtype and the first table lookup result. For example, if the target index value is represented by using idx, the first mapping relationship may be represented as idx=floor((L1/2-1)*I), where floor() represents an operation of rounding down to the nearest integer, L1 represents the first table lookup result, and I represents a quantity of preset index values. For example, the preset index values include 0, 1, 2, ..., and I-1, where the I preset index values correspond to I entries that are evenly distributed. The target index value is one of the preset index values. Only an exemplary first mapping relationship is shown herein. Practical applications are not limited to this exemplary first mapping relationship, but may also be any other mapping relationship.

In some optional embodiments, if the target interval type is the exponential table lookup interval subtype, the target index value is determined based on the mapping relationship (which may be referred to as a second mapping relationship) corresponding to the first table lookup result and the exponential table lookup interval subtype. For example, if the target index value is represented by using idx, the second mapping relationship may be represented as idx=floor(log2(L1)-1), where L1 represents the first table lookup result, and floor() represents an operation of rounding down to the nearest integer. For example, the index value range includes id0, id1, id2, ..., and id (E-1), and an interval between the index values may be 1, 2, or 3. For example, it is satisfied that id0=0, id1=1, id2=2, ..., and id (E-1)=E-1. For another example, it is satisfied that id0=0, id1=2, id2=4, .... The E preset index values correspond to E entries that are exponentially distributed. To be specific, the E entries include table lookup output values corresponding to 2 ^{id 0}, 2^{id1}, 2^{id2}, ..., and 2^{id(E-1)}. Emax represents a maximum exponent representing a range of the floating-point data. A range of 0-Emax is divided into E-1 ranges, and E index values are obtained. For example, if the exponent of the floating-point data is represented by using 8 bits, Emax is 2⁸=256. E is 256 if the range of 0-Emax is divided into E-1 ranges with the interval 1 between the index values. E is 128 if the interval between the index values is 2. Only an exemplary second mapping relationship is shown herein, and practical applications are not limited to this exemplary second mapping relationship.

In the embodiments of this disclosure, for the non-linear input interval, the index value for the secondary table lookup may be determined through the linear table lookup interval subtype and the exponential table lookup interval subtype, thereby providing a valid target index value for the implementation of the secondary table lookup, and effectively improving fitting accuracy of table lookup of the non-linear interval while less storage space is occupied.

In some optional embodiments, after the table lookup input data is determined based on the to-be-processed data from the processor or the to-be-processed data from the memory, the table lookup processing circuit is further configured to: determine the target index value based on the table lookup input data in response to that a pre-configured table lookup mode is a preset table lookup mode; and perform table lookup processing based on the target index value, to obtain the table lookup result corresponding to the table lookup input data.

The preset table lookup mode refers to a table lookup mode that does not distinguish between interval types, but to directly determine the target index value based on an exponent or a mantissa of the table lookup input data; perform table lookup processing based on the target index value to obtain a fitting parameter corresponding to the target index value; and then obtain, through fitting, the table lookup result corresponding to the table lookup input data based on the table lookup input data and the fitting parameter. For example, if the to-be-processed data is floating-point data, a part of the exponent or the mantissa of the floating-point data may be used as the target index value, and the fitting parameter may be found from the pre-configured LUT entries. Thus, the final table lookup result may be obtained through fitting based on the fitting parameter. When the operator changes slowly, has a narrow domain, and has low requirements for accuracy, a table lookup fitting result may be quickly obtained through the table lookup processing corresponding to the preset table lookup mode, while less storage space is occupied.

In some optional embodiments, as shown in FIG. 4, the lookup table unit 233 may include a third lookup table subunit 2334.

The operation subunit 2332 is configured to determine the target index value based on the table lookup input data in response to that the pre-configured table lookup mode is the preset table lookup mode. The third lookup table subunit 2334 is configured to perform table lookup processing based on the target index value, to obtain the table lookup result corresponding to the table lookup input data. For specific operations, reference may be made to the foregoing embodiments.

In some optional embodiments, the third lookup table subunit 2334 may be a subunit independent of the second lookup table subunit 2333 and the first lookup table subunit 2331 that are described above. Optionally, the third lookup table subunit 2334 may be implemented by reusing hardware of the second lookup table subunit 2333, so as to reduce a circuit area of the table lookup processing circuit and save hardware costs.

In some optional embodiments, FIG. 5 is a schematic diagram of a linear table lookup interval subtype according to an exemplary embodiment of this disclosure. As shown in FIG. 5, for the case where the to-be-processed data is floating-point data, since a valid data range of the floating-point data is from negative infinity (-nf) to positive infinity (+nf), the input data range (that is, the domain) of the operator is a subset of the valid data range of the floating-point data. The input data range of the operator may be divided into K input intervals, and a linear lookup table is of the linear table lookup interval subtype. Within each input interval of the linear lookup table, a table lookup index (that is, an index value) is in a linear relationship to input corresponding to the linear lookup table (for example, the first table lookup result is used as the input corresponding to the linear lookup table). The target index value may be obtained through linear mapping (that is, the first mapping relationship), and the linear lookup table corresponds to I entries that are evenly distributed.

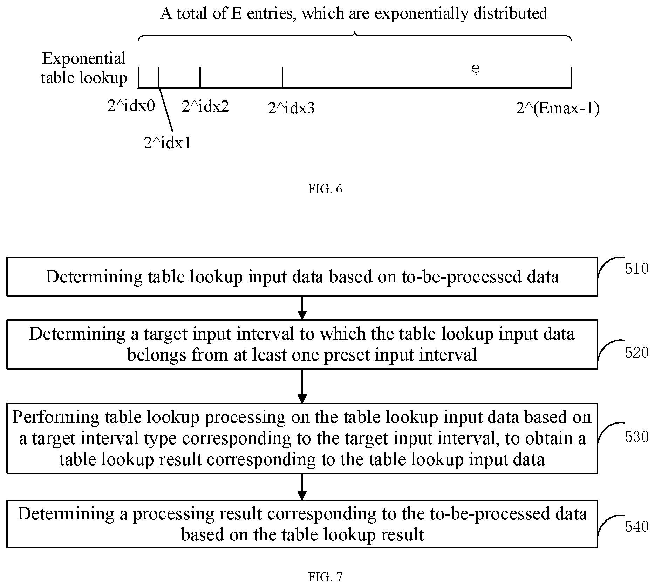

In some optional embodiments, FIG. 6 is a schematic diagram of an exponential table lookup interval subtype according to another exemplary embodiment of this disclosure. As shown in FIG. 6, an exponential lookup table is of the exponential table lookup interval subtype. Taking that the interval between the index values is 1 as an example, idxj (j=0, 1, ...) represents the index value, where idxj=j, and Emax represents an exponent of a maximum value of the floating-point data in a range to which the to-be-processed data or the table lookup input data belongs. 2^idxj represents 2^{idxj}, and LUT entries corresponding to the exponential table lookup interval subtype have a total of E=Emax-1 entries that are exponentially distributed.

In some optional embodiments, I and E may be different.

In some optional embodiments, the second lookup table subunit 2333 may be a subunit independent of the first lookup table subunit 2331.

In some optional embodiments, I and E are same, and the second lookup table subunit 2333 may reuse hardware of the first lookup table subunit 2331 to implement an operation of performing table lookup based on the index value. Through reuse of the hardware, the circuit area is reduced and hardware costs are saved.

In some optional embodiments, in the embodiments of this disclosure, same calculations or operations involved in the table lookup processing flow for different interval types and involved in the table lookup processing flow for the preset table lookup mode may be implemented by reusing the same hardware. For example, the table lookup operation is performed based on the index value, and a linear fitting operation is performed based on the linear fitting parameter, so as to reduce the circuit area and save the hardware costs. Details are not described herein.

In some optional embodiments, for a non-linear interval of the floating-point data (that is, the input interval of the second type), an exemplary process for the table lookup processing is as follows.
1. Obtain the to-be-processed data x.
2. Perform pre-processing on the to-be-processed based on the symmetry of the operator and the operation type, to obtain the table lookup input data. For example, if the operator is symmetrical about the y-axis or the origin, the table lookup input data x1=|x|, where |x| represents an absolute value of x.
3. Determine the target input interval for x1 from the K input intervals. For example, if the target input interval is an i^{th} input interval range (i), where a lower bound of range (i) is d1 and an upper bound is d2, it is satisfied that d1<x<=d2.
4. Perform first table lookup processing to obtain the first table lookup output value. To be specific, the fitting parameters (transK,transB)=LUT_TRANS (i), where LUT_TRANS (i) represents searching for the fitting parameters from LUT entries corresponding to the i^{th} input interval.
5. Determine the first table lookup result based on the first table lookup output value and the table lookup input data, where L1=(x+transB)*transK.
6. Calculate the target index value if the target interval type corresponding to the target input interval is the second type.
   To be specific, for the linear table lookup interval subtype, regarding a linear lookup table shown in FIG. 5, the target index value is determined based on the first mapping relationship. For example, it is satisfied that idx=floor((L 1/2-1)*I). It is ensured that a range of idx is within a range of [0, I-1], that is, L1 is within a range of [2,4), where I represents the quantity of the preset index values. If idx exceeds the range, the table lookup processing circuit 23 may be automatically clamped to the range of [0, I-1]. For example, if L1=10.0101, the target index value is obtained based on a fractional part 0101.
   For the exponential table lookup interval subtype, regarding an exponential lookup table shown in FIG. 6, the target index value is determined based on the second mapping relationship. For example, it is satisfied that idx=floor(log2(L1)-1). It is ensured that a range of idx is within a range of [0, E-1], that is, L1 is within a range of [2, 2^{E+1}). If idx exceeds the range, the table lookup processing circuit 23 may be automatically clamped to the range of [0, E-1]. E represents a maximum exponent representing a range of the floating-point data. For example, if the exponent of L1 is 10010011, 5 lower digits of the exponent, that is, 10011, may be used as the target index value.
7. Obtain the second table lookup output value through a secondary table lookup. For example, the linear fitting parameters (interK,interB)=LUT_INTER (idx)). In other words, the linear fitting parameters interK and interB corresponding to idx are searched from INTER entries based on the target index value idx.
8. Fit to obtain the table lookup result. To be specific, it is satisfied that L2=(L 1+interB)*interK.
9. Determine the processing result corresponding to the to-be-processed data based on the table lookup result.

If the symmetry is being symmetric about the origin and the to-be-processed data is a negative number, the processing result is -L2; or otherwise, the processing result is L2.

In some optional embodiments, the K preset input intervals may all be linear intervals. This case may be referred to as a piecewise linear lookup table. For example, if the operator is a polyline or a curve is fitted by using a polyline, The interval types of the K preset input intervals may all be set to linear intervals, and corresponding linear fitting parameters, such as the transB and the transK described above, may be set for each preset input interval. For table lookup input data that falls in any preset input interval, a first table lookup result corresponding to the table lookup input data is obtained through the linear fitting parameters corresponding to that preset input interval. The first table lookup result is the table lookup result corresponding to the table lookup input data. Thus, the operator is fitted through K linear mappings.

For details of the foregoing steps, reference may be made to the foregoing relevant embodiments, and details are not described herein. Only an exemplary table lookup processing process is given herein, and practical applications are not limited to this exemplary process.

According to the table lookup processing system provided in the embodiments of this disclosure, the input data range of the operator is divided into a plurality of input intervals, the interval types of the input intervals are set according to the characteristics of the operator in the input intervals; and different table lookup processing modes are set for different types of input intervals, such as a single table lookup mode for the linear interval, a secondary table lookup processing mode corresponding to the linear table lookup interval subtype of the non-linear interval, and a secondary table lookup processing mode corresponding to the exponential table lookup interval subtype of the non-linear interval. In this case, the fitting accuracy of table lookup and the table lookup processing performance of the input intervals can be effectively balanced, so as to meet requirements of different users for accuracy and performance.

The foregoing embodiments of this disclosure may be implemented separately or in any combination without conflict. This may be specifically set according to actual requirements, and is not limited in this disclosure.

### Exemplary method

FIG. 7 is a schematic flowchart of a table lookup processing method according to an exemplary embodiment of this disclosure. The method in this embodiment may be implemented by using a corresponding system in this disclosure. The method shown in FIG. 7 may include the following steps.

Step 510: Determining table lookup input data based on to-be-processed data.

Step 520: Determining a target input interval to which the table lookup input data belongs from at least one preset input interval.

Step 530: Performing table lookup processing on the table lookup input data based on a target interval type corresponding to the target input interval, to obtain a table lookup result corresponding to the table lookup input data.

Step 540: Determining a processing result corresponding to the to-be-processed data based on the table lookup result.

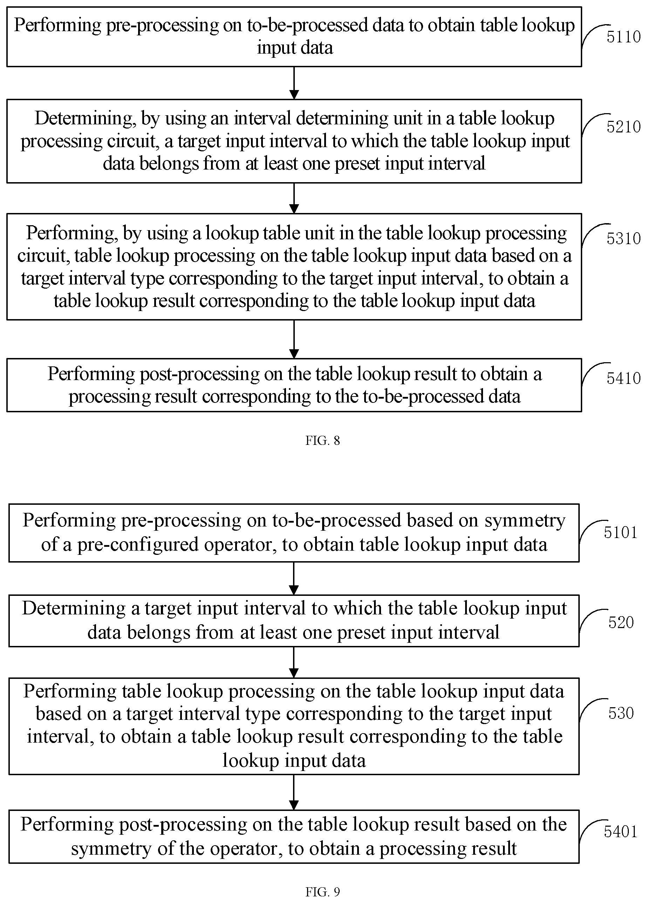

FIG. 8 is a schematic flowchart of a table lookup processing method according to another exemplary embodiment of this disclosure.

In some optional embodiments, on the basis of the embodiment shown in FIG. 7, as shown in FIG. 8, step 510 of determining table lookup input data based on to-be-processed data may include:

Step 5110: Performing pre-processing on the to-be-processed data to obtain the table lookup input data.

In some optional embodiments, a pre-processing unit in the table lookup processing circuit may be used to perform pre-processing on the to-be-processed data to obtain the table lookup input data.

In some optional embodiments, as shown in FIG. 8, step 520 of determining a target input interval to which the table lookup input data belongs from at least one preset input interval may include:

Step 5210: Determining, by using an interval determining unit in the table lookup processing circuit, a target input interval to which the table lookup input data belongs from at least one preset input interval.

In some optional embodiments, step 530 of performing table lookup processing on the table lookup input data based on a target interval type corresponding to the target input interval, to obtain a table lookup result corresponding to the table lookup input data may include:

Step 5310: Performing, by using a lookup table unit in the table lookup processing circuit, table lookup processing on the table lookup input data based on the target interval type corresponding to the target input interval, to obtain the table lookup result corresponding to the table lookup input data.

In some optional embodiments, step 540 of determining a processing result corresponding to the to-be-processed data based on the table lookup result may include:

Step 5410: Performing post-processing on the table lookup result to obtain the processing result corresponding to the to-be-processed data.

In some optional embodiments, the post-processing unit in the table lookup processing circuit may be used to perform post-processing on the table lookup result to obtain the processing result corresponding to the to-be-processed data.

In some optional embodiments, the table lookup processing circuit may further include a configuration register. The method in the embodiments of this disclosure may further include: writing configuration information into the configuration register, where the configuration information includes configuration information required by at least one unit of the pre-processing unit, the interval determining unit, the lookup table unit, and the post-processing unit in the table lookup processing circuit.

FIG. 9 is a schematic flowchart of a table lookup processing method according to still another exemplary embodiment of this disclosure.

In some optional embodiments, on the basis of any one of the foregoing embodiments, as shown in FIG. 9, step 510 of determining table lookup input data based on to-be-processed data may include:

Step 5101: Performing pre-processing on the to-be-processed based on the symmetry of a pre-configured operator, to obtain the table lookup input data.

The operator is an operator simulated through a table lookup processing function of the table lookup processing circuit.

Step 540 of determining a processing result corresponding to the to-be-processed data based on the table lookup result includes:
Step 5401: Performing post-processing on the table lookup result based on the symmetry of the operator, to obtain the processing result.

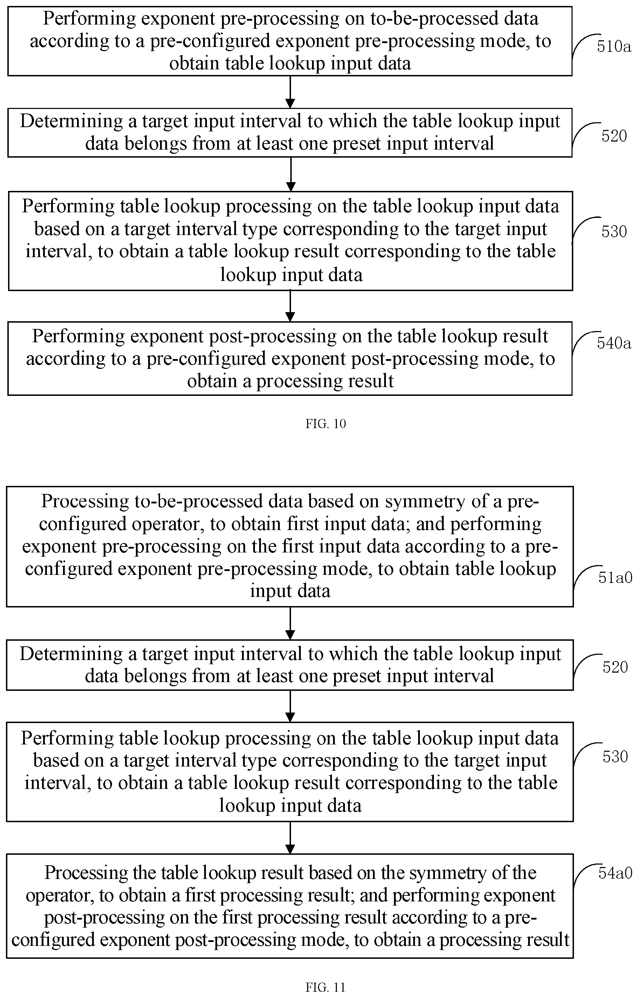

FIG. 10 is a schematic flowchart of a table lookup processing method according to yet another exemplary embodiment of this disclosure.

In some optional embodiments, on the basis of any one of the foregoing embodiments, the to-be-processed data is floating-point data.

As shown in FIG. 10, step 510 of determining table lookup input data based on to-be-processed data may include:

Step 510a: Performing exponent pre-processing on the to-be-processed data according to a pre-configured exponent pre-processing mode, to obtain the table lookup input data.

The exponent pre-processing mode is determined based on an operation type of the floating-point data.

Step 540 of determining a processing result corresponding to the to-be-processed data based on the table lookup result may include:

Step 540a: Performing exponent post-processing on the table lookup result according to a pre-configured exponent post-processing mode, to obtain the processing result.

The exponent post-processing mode corresponds to the exponent pre-processing mode, and the exponent is an exponent corresponding to the floating-point data.

FIG. 11 is a schematic flowchart of a table lookup processing method according to still yet another exemplary embodiment of this disclosure.

In some optional embodiments, on the basis of any one of the foregoing embodiments, as shown in FIG. 11, step 510 of determining table lookup input data based on to-be-processed data may include:

Step 51a0: Processing the to-be-processed data based on symmetry of a pre-configured operator, to obtain first input data; and performing exponent pre-processing on the first input data according to a pre-configured exponent pre-processing mode, to obtain the table lookup input data.

Step 540 of determining a processing result corresponding to the to-be-processed data based on the table lookup result may include:

Step 54a0: Processing the table lookup result based on the symmetry of the operator, to obtain a first processing result; and performing exponent post-processing on the first processing result according to a pre-configured exponent post-processing mode, to obtain the processing result.

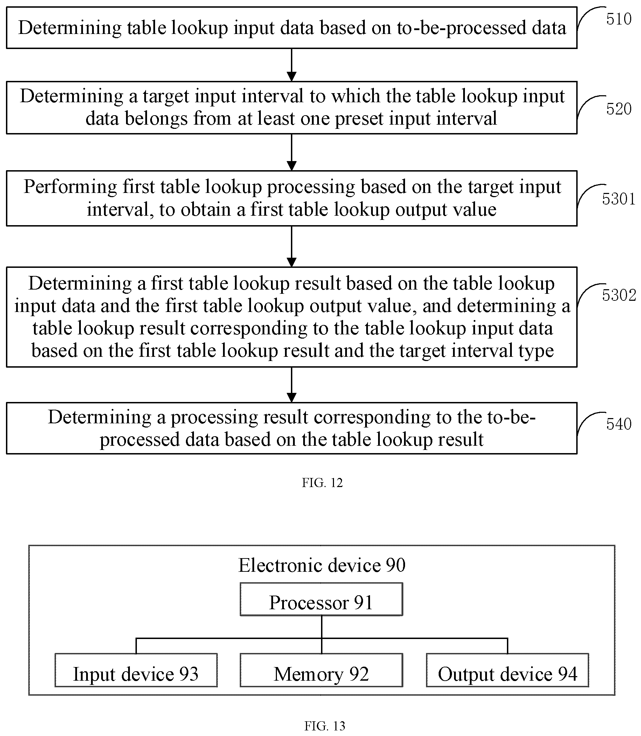

FIG. 12 is a schematic flowchart of a table lookup processing method according to a further exemplary embodiment of this disclosure.

In some optional embodiments, on the basis of any one of the foregoing embodiments, as shown in FIG. 12, step 530 of performing table lookup processing on the table lookup input data based on a target interval type corresponding to the target input interval, to obtain a table lookup result corresponding to the table lookup input data may include:

Step 5301: Performing first table lookup processing based on the target input interval, to obtain a first table lookup output value.

Step 5302: Determining a first table lookup result based on the table lookup input data and the first table lookup output value, and determining the table lookup result corresponding to the table lookup input data based on the first table lookup result and the target interval type.

In some optional embodiments, step 5302 of determining a first table lookup result based on the table lookup input data and the first table lookup output value, and determining the table lookup result corresponding to the table lookup input data based on the first table lookup result and the target interval type may include: in response to that the target interval type corresponding to the target input interval is a first type, determining the first table lookup result as the table lookup result corresponding to the table lookup input data.

In some optional embodiments, step 5302 of determining a first table lookup result based on the table lookup input data and the first table lookup output value, and determining the table lookup result corresponding to the table lookup input data based on the first table lookup result and the target interval type may include: determining, in response to that the target interval type is a second type, a target index value for a secondary table lookup based on the first table lookup result; performing table lookup processing based on the target index value, to obtain a second table lookup output value; and determining the table lookup result based on the first table lookup result and the second table lookup output value.

In some optional embodiments, the second type includes a linear table lookup interval subtype and an exponential table lookup interval subtype; and the determining a target index value for a secondary table lookup based on the first table lookup result may include:

in response to that the target interval type is the linear table lookup interval subtype, determining the target index value based on the first table lookup result and a mapping relationship corresponding to the linear table lookup interval subtype; or in response to that the target interval type is the exponential table lookup interval subtype, determining the target index value based on the first table lookup result and a mapping relationship corresponding to the exponential table lookup interval subtype.

In some optional embodiments, after the table lookup input data is determined based on to-be-processed data from a processor or to-be-processed data from a memory, the method may further include:
determining the target index value based on the table lookup input data in response to that a pre-configured table lookup mode is a preset table lookup mode; and performing table lookup processing based on the target index value, to obtain the table lookup result corresponding to the table lookup input data.

The foregoing embodiments of this disclosure may be implemented separately or in any combination without conflict. This may be specifically set according to actual requirements, and is not limited in this disclosure.

Any table lookup processing method provided in the embodiments of this disclosure may be implemented by any suitable electronic device with a data processing capability, including but not limited to a terminal device, a server, and other electronic devices. Alternatively, any table lookup processing method provided in the embodiments of this disclosure can be implemented by the processor. For example, the processor implements any table lookup processing method described in the embodiments of this disclosure by invoking corresponding instructions stored in the memory. Details are not described below.

### Exemplary electronic device

FIG. 13 is a diagram of a structure of an electronic device according to an embodiment of this disclosure. The electronic device includes at least one processor 91 and a memory 92.

The processor 91 may be a central processing unit (CPU) or another form of processing unit having a data processing capability and/or an instruction execution capability, and may control other components in the electronic device 90 to implement desired functions.

The memory 92 may include one or more computer program products, which may include various forms of computer readable storage media, such as a volatile memory and/or a non-volatile memory. The volatile memory may include, for example, a random access memory (RAM) and/or a cache. The nonvolatile memory may include, for example, a read-only memory (ROM), a hard disk, and a flash memory. One or more computer program instructions may be stored on the computer readable storage medium. The processor 91 may execute the one or more program instructions to implement the method according to various embodiments of this disclosure that are described above and/or other desired functions.

In an example, the electronic device 90 may further include an input device 93 and an output device 94. These components are connected to each other through a bus system and/or another form of connection mechanism (not shown).

The input device 93 may further include a touch screen, a microphone, and various sensors. The sensors may include, for example, an image sensor (such as a camera or a lens), a laser radar, a millimeter wave radar, an ultrasonic radar, a positioning sensor, a pressure sensor, an air quality sensor, and a temperature sensor. The image sensor, the laser radar, the millimeter wave radar, and the ultrasonic radar may be used to sense surrounding environments, that is, to detect dynamic and static objects in the surrounding environments. The dynamic and static objects may include static objects such as a lane marking, a road edge, an arrow, a sign, a trees, and a building, and dynamic objects such as a surrounding vehicle, a pedestrian, and a cyclist. The positioning sensor is used to locate a mobile device (such as a vehicle or a robot) where the electronic device is located. The positioning sensor may include, for example, an inertial measurement unit (IMU for short) and a global positioning system (GPS for short). The pressure sensor may be used to detect seat pressure. The temperature sensor may be used to detect temperature inside a vehicle cockpit. The air quality sensor may be used to detect air quality inside the vehicle cockpit.

The output device 94 may output various information to the outside, and may include, for example, a display, a speaker, a communication network, and a remote output device connected to the communication network.

Certainly, for simplicity, FIG. 13 shows only some of components in the electronic device 90 that are related to this disclosure, and components such as a bus and an input/output interface are omitted. In addition, according to specific application situations, the electronic device 90 may further include any other appropriate components.

### Exemplary computer program product and computer readable storage medium

In addition to the foregoing method and device, embodiments of this disclosure may also provide a computer program product, which includes computer program instructions. When the computer program instructions are run by a processor, the processor is enabled to perform the steps, of the method according to the embodiments of this disclosure, that are described in the "Exemplary method" section described above.

The computer program product may be program code, written with one or any combination of a plurality of programming languages, that is configured to perform the operations in the embodiments of this disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of this disclosure may further relate to a computer readable storage medium, which stores computer program instructions. When the computer program instructions are run by the processor, the processor is enabled to perform the steps, of the method according to the embodiments of this disclosure, that are described in the "Exemplary method" section described above.

The computer readable storage medium may be one readable medium or any combination of a plurality of readable media. The readable medium may be a readable signal medium or a readable storage medium. The readable storage medium includes, for example but is not limited to electricity, magnetism, light, electromagnetism, infrared ray, or a semiconductor system, an apparatus, or a device, or any combination of the above. More specific examples (a non-exhaustive list) of the readable storage medium include: an electrical connection with one or more conducting wires, a portable disk, a hard disk, a random access memory (RA
M), a read-only memory (ROM), an erasable programmable read-only memory (EPROM or a flash memory), an optical fiber, a portable compact disk read-only memory (CD-ROM), an optical storage device, a magnetic storage device, or any suitable combination of the above.

Basic principles of this disclosure are described above in combination with specific embodiments. However, advantages, superiorities, and effects mentioned in this disclosure are merely examples but are not for limitation, and it cannot be considered that these advantages, superiorities, and effects are necessary for the embodiments of this disclosure. In addition, specific details described above are merely for examples and for ease of understanding, rather than limitations. The details described above do not limit that this disclosure must be implemented by using the foregoing specific details.

A person skilled in the art may make various modifications and variations to this disclosure without departing from the spirit and the scope of this application. In this way, if these modifications and variations of this application fall within the scope of the claims and equivalent technologies of the claims of this disclosure, this disclosure also intends to include these modifications and variations.

## Claims

1. A table lookup processing system (20), **characterized in that** the table lookup processing system comprises:
a memory (22);
a processor (21), coupled to the memory (22); and
a table lookup processing circuit (23) coupled to the memory (22) and the processor (21), wherein the table lookup processing circuit (23) is configured to:
determine table lookup input data based on to-be-processed data from the processor (21) or to-be-processed data from the memory (22);
determine a target input interval to which the table lookup input data belongs from at least one preset input interval;
perform table lookup processing on the table lookup input data based on a target interval type corresponding to the target input interval, to obtain a table lookup result corresponding to the table lookup input data;
determine a processing result corresponding to the to-be-processed data based on the table lookup result; and
write the processing result into the memory (22).

2. The system according to claim 1, wherein the table lookup processing circuit (23) comprises:
a pre-processing unit (231), configured to perform pre-processing on the to-be-processed data to obtain the table lookup input data;
an interval determining unit (232), configured to determine the target input interval to which the table lookup input data belongs;
a lookup table unit (233), configured to perform table lookup processing on the table lookup input data based on the target interval type corresponding to the target input interval, to obtain the table lookup result corresponding to the table lookup input data; and
a post-processing unit (234), configured to perform post-processing on the table lookup result to obtain the processing result corresponding to the to-be-processed data.

3. The system according to claim 2, wherein the table lookup processing circuit (23) further comprises:
a configuration register (235), configured to store configuration information from the processor (21), wherein the configuration information comprises configuration information required by at least one unit of the pre-processing unit (231), the interval determining unit (232), the lookup table unit (233), and the post-processing unit (234) in the table lookup processing circuit (23).

4. The system according to claim 2, wherein
the pre-processing unit (231) is configured to perform pre-processing on the to-be-processed data based on symmetry of a pre-configured operator, to obtain the table lookup input data, wherein the operator is an operator simulated through a table lookup processing function of the table lookup processing circuit (23); and
the post-processing unit (234) is configured to perform post-processing on the table lookup result based on the symmetry of the operator, to obtain the processing result.

5. The system according to claim 2, wherein the to-be-processed data is floating-point data;
the pre-processing unit (231) is configured to perform exponent pre-processing on the to-be-processed data according to a pre-configured exponent pre-processing mode, to obtain the table lookup input data, wherein the exponent pre-processing mode is determined based on an operation type of the floating-point data; and
the post-processing unit (234) is configured to perform exponent post-processing on the table lookup result according to a pre-configured exponent post-processing mode, to obtain the processing result, wherein the exponent post-processing mode corresponds to the exponent pre-processing mode, and the exponent is an exponent corresponding to the floating-point data.

6. The system according to claim 2, wherein
the pre-processing unit (231) is configured to process the to-be-processed data based on symmetry of a pre-configured operator, to obtain first input data; and perform exponent pre-processing on the first input data according to a pre-configured exponent pre-processing mode, to obtain the table lookup input data; and
the post-processing unit (234) is configured to process the table lookup result based on the symmetry of the operator, to obtain a first processing result; and perform exponent post-processing on the first processing result according to a pre-configured exponent post-processing mode, to obtain the processing result.

7. The system according to claim 2, wherein the lookup table unit (233) comprises:
a first lookup table subunit (2331), configured to perform first table lookup processing based on the target input interval, to obtain a first table lookup output value; and
an operation subunit (2332), configured to determine a first table lookup result based on the table lookup input data and the first table lookup output value, and determine the table lookup result corresponding to the table lookup input data based on the first table lookup result and the target interval type.

8. The system according to claim 7, wherein the operation subunit (2332) is configured to:
in response to that the target interval type corresponding to the target input interval is a first type, determine the first table lookup result as the table lookup result corresponding to the table lookup input data.

9. The system according to claim 7, wherein the lookup table unit (233) further comprises:
a second lookup table subunit (2333);
the operation subunit (2332) is further configured to determine, in response to that the target interval type is a second type, a target index value for a secondary table lookup based on the first table lookup result, and transmit the target index value to the second lookup table subunit (2333);
the second lookup table subunit (2333) is configured to perform table lookup processing based on the target index value, to obtain a second table lookup output value; and
the operation subunit (2332) is further configured to determine the table lookup result based on the first table lookup result and the second table lookup output value.

10. The system according to claim 9, wherein the second type comprises a linear table lookup interval subtype and an exponential table lookup interval subtype; and
the operation subunit (2332) is specifically configured to:
in response to that the target interval type is the linear table lookup interval subtype, determine the target index value based on the first table lookup result and a mapping relationship corresponding to the linear table lookup interval subtype; or
in response to that the target interval type is the exponential table lookup interval subtype, determine the target index value based on the first table lookup result and a mapping relationship corresponding to the exponential table lookup interval subtype.

11. The system according to any one of claims 1 to 10, wherein after determining the table lookup input data based on the to-be-processed data from the processor (21) or the to-be-processed data from the memory (22), the table lookup processing circuit (23) is further configured to:
determine the target index value based on the table lookup input data in response to that a pre-configured table lookup mode is a preset table lookup mode; and
perform table lookup processing based on the target index value, to obtain the table lookup result corresponding to the table lookup input data.

12. A table lookup processing method, **characterized in that** the table lookup processing method comprises:
determining (510) table lookup input data based on to-be-processed data;
determining (520) a target input interval to which the table lookup input data belongs from at least one preset input interval;
performing (530) table lookup processing on the table lookup input data based on a target interval type corresponding to the target input interval, to obtain a table lookup result corresponding to the table lookup input data; and
determining (540) a processing result corresponding to the to-be-processed data based on the table lookup result.

13. A computer readable storage medium, **characterized in that** the storage medium stores a computer program, and the computer program is executed by a processor to implement the method according to claim 12.

14. An electronic device (90), **characterized in that** the electronic device comprises:
a processor (91); and
a memory (92), configured to store processor-executable instructions, wherein
the processor (91) is configured to read the executable instructions from the memory (92), and execute the instructions to implement the method according to claim 12, or
the electronic device comprises the system according to any one of claims 1 to 11.

15. A chip, **characterized in that** the chip comprises the system according to any one of claims 1 to 11.

## Amended claims

### Amended claims in accordance with Rule 137(2) EPC.

1. A table lookup processing system (20), comprising:
a memory (22);
a processor (21), coupled to the memory (22); and
a table lookup processing circuit (23) coupled to the memory (22) and the processor (21), **characterized in that** the table lookup processing circuit (23) is configured to:
determine table lookup input data based on to-be-processed data from the processor (21) or to-be-processed data from the memory (22);
determine a target input interval to which the table lookup input data belongs from at least one preset input interval;
perform, based on a target interval type corresponding to the target input interval, table lookup processing corresponding to the target interval type on the table lookup input data, to obtain a table lookup result corresponding to the table lookup input data;
determine a processing result corresponding to the to-be-processed data based on the table lookup result; and
write the processing result into the memory (22).

2. The system according to claim 1, wherein the table lookup processing circuit (23) comprises:
a pre-processing unit (231), configured to perform pre-processing on the to-be-processed data to obtain the table lookup input data;
an interval determining unit (232), configured to determine the target input interval to which the table lookup input data belongs;
a lookup table unit (233), configured to perform table lookup processing on the table lookup input data based on the target interval type corresponding to the target input interval, to obtain the table lookup result corresponding to the table lookup input data; and
a post-processing unit (234), configured to perform post-processing on the table lookup result to obtain the processing result corresponding to the to-be-processed data.

3. The system according to claim 2, wherein the table lookup processing circuit (23) further comprises:
a configuration register (235), configured to store configuration information from the processor (21), wherein the configuration information comprises configuration information required by at least one unit of the pre-processing unit (231), the interval determining unit (232), the lookup table unit (233), and the post-processing unit (234) in the table lookup processing circuit (23).

4. The system according to claim 2, wherein
the pre-processing unit (231) is configured to perform pre-processing on the to-be-processed data based on symmetry of a pre-configured operator, to obtain the table lookup input data, wherein the operator is an operator simulated through a table lookup processing function of the table lookup processing circuit (23); and
the post-processing unit (234) is configured to perform post-processing on the table lookup result based on the symmetry of the operator, to obtain the processing result.

5. The system according to claim 2, wherein the to-be-processed data is floating-point data;
the pre-processing unit (231) is configured to perform exponent pre-processing on the to-be-processed data according to a pre-configured exponent pre-processing mode, to obtain the table lookup input data, wherein the exponent pre-processing mode is determined based on an operation type of the floating-point data; and
the post-processing unit (234) is configured to perform exponent post-processing on the table lookup result according to a pre-configured exponent post-processing mode, to obtain the processing result, wherein the exponent post-processing mode corresponds to the exponent pre-processing mode, and the exponent is an exponent corresponding to the floating-point data.

6. The system according to claim 2, wherein
the pre-processing unit (231) is configured to process the to-be-processed data based on symmetry of a pre-configured operator, to obtain first input data; and perform exponent pre-processing on the first input data according to a pre-configured exponent pre-processing mode, to obtain the table lookup input data; and
the post-processing unit (234) is configured to process the table lookup result based on the symmetry of the operator, to obtain a first processing result; and perform exponent post-processing on the first processing result according to a pre-configured exponent post-processing mode, to obtain the processing result.

7. The system according to claim 2, wherein the lookup table unit (233) comprises:
a first lookup table subunit (2331), configured to perform first table lookup processing based on the target input interval, to obtain a first table lookup output value; and
an operation subunit (2332), configured to determine a first table lookup result based on the table lookup input data and the first table lookup output value, and determine the table lookup result corresponding to the table lookup input data based on the first table lookup result and the target interval type.

8. The system according to claim 7, wherein the operation subunit (2332) is configured to:
in response to that the target interval type corresponding to the target input interval is a first type, determine the first table lookup result as the table lookup result corresponding to the table lookup input data.

9. The system according to claim 7, wherein the lookup table unit (233) further comprises:
a second lookup table subunit (2333);
the operation subunit (2332) is further configured to determine, in response to that the target interval type is a second type, a target index value for a secondary table lookup based on the first table lookup result, and transmit the target index value for the secondary table lookup to the second lookup table subunit (2333);
the second lookup table subunit (2333) is configured to perform table lookup processing based on the target index value for the secondary table lookup, to obtain a second table lookup output value; and
the operation subunit (2332) is further configured to determine the table lookup result based on the first table lookup result and the second table lookup output value.

10. The system according to claim 9, wherein the second type comprises a linear table lookup interval subtype and an exponential table lookup interval subtype; and
the operation subunit (2332) is specifically configured to:
in response to that the target interval type is the linear table lookup interval subtype, determine the target index value for the secondary table lookup based on the first table lookup result and a mapping relationship corresponding to the linear table lookup interval subtype; or
in response to that the target interval type is the exponential table lookup interval subtype, determine the target index value for the secondary table lookup based on the first table lookup result and a mapping relationship corresponding to the exponential table lookup interval subtype.

11. The system according to any one of claims 1 to 10, wherein after determining the table lookup input data based on the to-be-processed data from the processor (21) or the to-be-processed data from the memory (22), the table lookup processing circuit (23) is further configured to:
determine a target index value based on the table lookup input data in response to that a pre-configured table lookup mode is a preset table lookup mode; and
perform table lookup processing based on the target index value, to obtain the table lookup result corresponding to the table lookup input data.

12. A table lookup processing method, **characterized in that** the table lookup processing method comprises:
determining (510) table lookup input data based on to-be-processed data;
determining (520) a target input interval to which the table lookup input data belongs from at least one preset input interval;
performing (530), based on a target interval type corresponding to the target input interval, table lookup processing corresponding to the target interval type on the table lookup input data, to obtain a table lookup result corresponding to the table lookup input data; and
determining (540) a processing result corresponding to the to-be-processed data based on the table lookup result.

13. A computer readable storage medium, **characterized in that** the storage medium stores a computer program, and the computer program is executed by a processor to implement the method according to claim 12.

14. An electronic device (90), **characterized in that** the electronic device comprises:
a processor (91); and
a memory (92), configured to store processor-executable instructions, wherein
the processor (91) is configured to read the executable instructions from the memory (92), and execute the instructions to implement the method according to claim 12; or
the electronic device comprises the system according to any one of claims 1 to 11.

15. A chip, **characterized in that** the chip comprises the system according to any one of claims 1 to 11.
